# EUROPÄISCHE PATENTSCHRIFT

(11) **EP 3 470 903 B1**
(45) Veröffentlichungstag und Bekanntmachung des Hinweises auf die Patenterteilung: **06.11.2024**
(21) Anmeldenummer: 18196758.9
(22) Anmeldetag: 26.09.2018
(51) Int. Cl.: B29C 45/14, G02B 7/00, G02B 7/02

(54) **SPRITZGIESSFORM ZU HERSTELLUNG EINES OPTISCHEN BAUELEMENTS MIT EINEM GRUNDKÖRPER UND EINER KUNSTSTOFF-FASSUNG**
INJECTION MOLD FOR MANUFACTURING OF AN OPTICAL COMPONENT HAVING A BASE BODY AND A PLASTIC SOCKET
MOULE D'INJECTION POUR LA FORMATION D'UN COMPOSANT OPTIQUE DOTÉ D'UN CORPS DE BASE ET D'UN BORD EN MATIÈRE PLASTIQUE

(30) Priorität: 26.09.2017 DE 202017105854 U
(43) Veröffentlichungstag der Anmeldung: 17.04.2019
(73) Patentinhaber: KAP Precision Components GmbH, 36043 Fulda (DE)
(72) Erfinder: ECKHARDT, Enrico, 01097 Dresden (DE)
(74) Vertreter: Aera A/S

(56) Entgegenhaltungen:
- DE-A1- 102008 048 333
- US-A1- 2014 339 738
- US-A1- 2016 303 783

## Beschreibung

Die Erfindung betrifft ein Spritzgießwerkzeug mit einem Stellelement und einem Dickenausgleichselement zur Herstellung eines Bauelements, das einen Grundkörper und eine einstückige umspritzte Fassung aus Kunststoff aufweist. Bei dem Bauelement kann es sich beispielsweise um eine gefasste optische Linse, ein gefasstes Deckglas, einen gefassten Filter oder eine gefasste Sonnenblende handeln. Insbesondere betrifft die Erfindung ein durch Kunststoff gefasstes Deckglas. Die Erfindung betrifft ferner Verfahren zur Herstellung eines solchen Bauelementes unter Verwendung des Spitzgießwerkzeugs.

Aus DE 10 2008 048 333 A1 ist ein Filterring bekannt, der einen Glaskörper und eine den Glasköper haltende, einstückige Fassung aufweist. Der Filterring kann kostengünstig hergestellt werden, stellt eine exakte und unveränderliche Position des Glaskörpers in der Fassung sicher und ermöglicht eine exakte Befestigung des Filterrings an einem Objektiv. Die dazu erforderliche Fassung, die aus einem Kunststoffmaterial, das den Glaskörper formschlüssig einfasst, besteht, weist eine anspruchsvolle geometrische Gestalt auf. Sie besitzt einen ersten und einen zweiten Steg, zwischen denen der Glaskörper gehalten wird. Die beiden Stege sind erforderlich, um den Glaskörper in der Fassung zu fixieren. Zur Herstellung des Filterrings wird der Glaskörper in eine Spritzgießform einer Spritzgießmaschine eingeführt und dort mittels Werkzeugelementen fixiert. Anschließend wird zur Ausbildung der Fassung Kunststoff in eine Kavität eingespritzt, die von der Spritzgießform, den Werkzeugelementen und dem Glaskörper gebildet wird. Je anspruchsvoller die Gestalt der Fassung ist, umso höher sind die Anforderungen an die Ausbildung der Kavität. Die Dokumente US 2014/339738 A1, DE 10 2008 04833 A1 und US 2016/303783 A1 beschreiben Verfahren zur Herstellung von Bauelementen, wobei das Bauelement zur Bearbeitung in ein Werkzeug gegeben, dort fixiert und anschließend umspritzt wird.
Aufgabe der Erfindung ist es, die Nachteile nach dem Stand der Technik zu beseitigen. Es soll insbesondere ein Spritzgießwerkzeug zur Herstellung eines Bauelements bereitgestellt werden, das einen Grundkörper mit einer einstückigen umspritzten Fassung aufweist, wobei die Fassung bei weiter verringertem Materialeinsatz den Grundkörper sicher in einer exakten und unveränderlichen Position hält. Insbesondere sollen Serien von Bauelementen mit unterschiedlichen Dicken verarbeitet werden können, ohne dass Veränderungen am Spritzgießwerkzeug vorgenommen werden müssen Ferner sollen Verfahren zur Herstellung eines solchen Bauelementes angegeben werden.

Diese Aufgabe wird durch die Merkmale von Anspruch 1 und 10 gelöst. Zweckmäßige Ausgestaltungen der Erfindungen ergeben sich aus den Merkmalen der Unteransprüche. Die Erfindung ist durch die Ansprüche 1 und 10 definiert.

Das Bauelement weist einen Grundkörper und eine Fassung auf, wobei der Grundkörper eine erste Fläche, eine von der ersten Fläche beabstandete zweite Fläche und einen Rand aufweist und die Fassung eine einstückige umspritzte Fassung aus einem starren Kunststoff ist. Die Fassung weist einen Innenrand auf, der an den Rand des Grundkörpers formschlüssig angrenzt. Der Grundkörper ist an einer seiner beiden Flächen und seinem Rand, aber nicht an der anderen Fläche von der Fassung umspritzt. Diese Fläche wird im Folgenden auch als "freie Fläche" bezeichnet. Es kann vorgesehen sein, dass das Bauelement aus dem Grundkörper und der Fassung besteht.

Das Bauelement zeichnet sich dadurch aus, dass es nur an seinem Rand und an einer seiner beiden Flächen, nicht aber an beiden Flächen von der Fassung gehalten wird. Der Grundkörper ist damit nur einseitig gefasst. Der Begriff "Umspritzen" kann daher so verstanden werden, dass die Fassung um den Rand des Grundkörpers gespritzt ist, so dass die Fassung den Grundkörper an seinem Rand vollständig umgreift. Die Fassung erstreckt sich dabei auf die Fläche des Grundkörpers, an der er von der Fassung gehalten wird, ohne diese Fläche vollständig zu bedecken. Vielmehr bedeckt er diese Fläche nur in einem an den Rand angrenzenden Bereich. Der größte Teil auch dieser Fläche ist vorzugsweise nicht von der Fassung bedeckt. In einer bevorzugten Ausführungsform ist vorgesehen, dass die Fassung an der Fläche, an der sie nicht von der Fassung umspritzt ist - das ist die freie Fläche -, bündig zur Kante zwischen dem Rand des Grundkörpers und dieser Fläche des Grundkörpers ausgebildet ist.

Die Fassung ist im Spritzgießverfahren umspritzt. Dazu kann ein verflüssigtes Kunststoffmaterial durch Druck in eine Kavität gespritzt werden, wie mittels einer Spritzgießform auf einer Spritzgießmaschine. Bei der Verfestigung des verflüssigten Kunststoffmaterials nach dem Einspritzen in die Spritzgießform schrumpft das Kunststoffmaterial, wodurch ein formschlüssiger Sitz der Fassung an dem Grundkörper erhalten wird. Aufgrund der Formschlüssigkeit und der Spannungen, die beim Schrumpfen des Kunststoffmaterials entstehen, wird ein derart fester Halt zwischen der Fassung und dem Grundkörper erhalten, dass keine Umfassung der freien Fläche des Grundkörpers, die ein Herausfallen des Grundkörpers aus der Fassung verhindern sollen, an beiden Flächen des Grundkörpers erforderlich ist. Der Grundkörper sollte ausreichend hohe mechanische Festigkeitswerte aufweisen, um die erforderliche mechanische Stabilität zu erreichen.

Der Grundkörper ist vorzugsweise ein starrer Körper. Er kann aus einem beliebigen Material bestehen. Beispielsweise kann der Grundkörper aus Glas und/oder Kunststoff bestehen. Der Grundkörper kann teilweise oder vollständig transparent oder teilweise oder vollständig transluzent sein. Der Grundkörper kann eine Färbung oder Tönung aufweisen. Der Grundkörper kann an einer oder beiden Flächen teilweise oder vollständig bedruckt sein. Der Färbungs- oder Tönungsgrad und/oder die Druckfarbe können dabei beliebig gewählt werden.

Bei dem Grundkörper kann es sich beispielsweise um eine optische Linse, ein Deckglas, eine Scheibe oder eine Platte handeln. Durch Umspritzen der Fassung um den Grundkörper wird dann das entsprechende Bauelement, beispielsweise eine gefasste optische Linse, ein gefasstes Deckglas, eine gefasste Scheibe bzw. eine gefasste Platte erhalten.

Die erste Fläche und die zweite Fläche können unter Ausbildung des Randes von einander beabstandet sein.

Der Grundkörper kann eine beliebige Gestalt aufweisen. Beispielsweise kann der Grundkörper eine regelmäßige oder unregelmäßige geometrische Gestalt haben. Der Grundkörper kann beispielsweise rund, oval oder eckig sein. Der Grundkörper kann beispielsweise einen kreisförmigen, ovalen oder eckigen Querschnitt haben. Die beiden Flächen des Grundkörpers, insbesondere die erste Fläche und/oder die zweite Fläche des Grundkörpers, können jeweils beispielsweise eben, gewölbt oder eine Kombination aus flachen und gewölbten Bereichen sein. Unter dem Begriff "gewölbt" wird insbesondere eine konkave oder konvexe Wölbung verstanden, wobei eine Fläche auch einen oder mehrere konkave Bereiche, einen oder mehrere konvexe Bereiche, einen oder mehrere flache Bereiche oder Kombinaten derartiger Bereiche aufweisen kann.

Der Grundkörper ist vorzugsweise ein flacher Körper. Unter einem flachen Körper wird dabei ein Körper verstanden, dessen Rand eine geringere Ausdehnung hat als die die erste und zweite Flächen in einer Richtung orthogonal zur Ausdehnung des Randes. In einer Ausführungsform kann der Grundkörper eine annähernd zylinderförmige Grundform aufweisen, wobei die erste und zweite Fläche jeweils gewölbt oder flach sein können. In einer anderen Ausführungsform kann der Grundkörper eine annähernd plattenförmige Grundform aufweisen, wobei die erste und zweite Fläche gewölbt oder flach sein können. Es kann vorgesehen sein, dass die Kante(n) der ersten und zweiten Fläche parallel zueinander verlaufen. Vorzugsweise haben die erste und zweite Fläche die gleiche Ausdehnung in orthogonaler Richtung zum Rand des Grundkörpers. Die erste und zweite Fläche können die gleiche geometrische Gestalt, beispielsweise flach oder gewölbt, oder unterschiedliche Gestalten aufweisen. Beispielsweise kann eine dieser Flächen flach und die andere konkav oder konvex ausgebildet sein; eine dieser Flächen ist konkav, die andere konvex ausgebildet; beide Flächen sind konkav gewölbt, weisen aber unterschiedliche Krümmungen auf; oder beide Flächen sind konvex gekrümmt, weisen aber unterschiedliche Krümmungen auf.

Der Grundkörper kann in der ersten und/oder der zweiten Fläche eine oder mehrere Unregelmäßigkeiten in der Oberfläche aufweisen. In der Oberfläche des Randes können eine oder mehrere Unregelmäßigkeiten ausgebildet sein. Unter dem Begriff "Unregelmäßigkeiten" werden dabei insbesondere Abweichungen von der geometrischen Idealgestalt verstanden. Dabei kann es sich um fertigungsbedingte Abweichungen, die in der Fachsprache als "fertigungsbedingte Dickentoleranzen" bezeichnet werden, handeln, d. h. Abweichungen, die bei der Fertigung des Grundkörpers entstehen. Ein Schleifprozess zum Glätten des Grundkörpers oder ein ähnliches Verfahren zur Oberflächenbehandlung ist somit nicht erforderlich.

Die Fassung kann einen Außenrand aufweisen, in dem ein Außengewinde ausgebildet ist. Die Fassung kann einen umlaufenden ersten Steg aufweisen, der an den Innenrand der Fassung angrenzt und auf dem der Grundkörper mit einer seiner Flächen aufliegt. Dieser Steg kann eine Oberfläche aufweisen, auf der der Grundkörper aufliegt und die in einem Winkel von 90° zum Innenrand der Fassung verläuft. Die Fassung kann einen umlaufenden zweiten Steg aufweisen, der an den Außenrand der Fassung angrenzt. Der zweite Steg kann einen dritten Steg tragen, der sich in einem Winkel zum zweiten Steg erstreckt. Der Winkel kann ein rechter Winkel sein. Der zweite Steg kann ein erstes Ende aufweisen, das an den Außenrand der Fassung angrenzt. Am anderen Ende des Steges kann der dritte Steg ausgebildet sein. Bezogen auf den Rand des Grundkörpers kann der zweite Steg eine Oberfläche aufweisen, die bündig zur Kante zwischen dem Rand und einer der beiden Flächen des Grundkörpers ausgebildet ist. Zwischen einer Oberfläche des zweiten Steges und einer Oberfläche des ersten Steges kann der Innenrand der Fassung verlaufen. Dabei kann der Innenrand der Fassung von der Oberfläche des ersten Steges, auf der der Grundkörper mit einer seiner beiden Flächen aufliegt, zu der Oberfläche des zweiten Steges, die bündig zur Kante zwischen der anderen Fläche des Grundkörpers ausgebildet ist, verlaufen.

Die Fassung und der Grundkörper können aus demselben oder aus unterschiedlichen Kunststoffen hergestellt sein. Der Kunststoff, aus dem der Grundkörper und/oder die Fassung bestehen, ist vorzugsweise ein thermoplastisches Polymer. Bei dem Kunststoff, aus dem der Grundkörper und/oder die Fassung bestehen, kann es sich um einen Biokunststoff handeln, vorzugsweise um einen thermoplastischen Biokunststoff. Unter einem Biokunststoff wird dabei ein Kunststoff verstanden, der auf einem oder mehreren nachwachsenden Rohstoffen basiert und/oder biologisch abbaubar ist. Es kann vorgesehen sein, dass der Kunststoff, aus dem der Grundkörper und/oder die Fassung bestehen, mittels Zweikomponenten-Verarbeitung hergestellt ist. Ein geeignetes thermoplastisches Polymer ist ein Polyamid oder Polyamid 6, insbesondere glaskugel-gefülltes Polyamid 6. Der Kunststoff sollte ausreichende mechanische Festigkeit und Elastizität sowie geringe Querschnitte besitzen, um große Spannungen auszugleichen und/oder aufzunehmen. Der Kunststoff ist bei Umgebungstemperaturen zwischen -25 und +85 °C vorzugsweise so elastisch, dass unterschiedliche Temperaturkoeffizienten zwischen Glas und Kunststoff ausgeglichen werden können. Auf diese Weise werden Differenzspannungen durch die Elastizität des Kunststoffes ausgeglichen. Der Kunststoff kann beliebig gefärbt sein. Eine Lackierung der Fassung ist somit nicht erforderlich.

Die Fassung kann auf den Grundkörper aufgeschrumpft sein. Die Verbindung zwischen dem Grundkörper und der Fassung kann somit durch Formschluss und Aufschrumpfung gesichert werden.

Bei dem Bauelement kann es sich beispielsweise um ein gefasstes Deckglas oder um ein optisches Bauelement handeln. Ein gefasstes Deckglas kann insbesondere zum Abdecken des Instrumentenbereiches eines Kraftfahrzeuges verwendet werden. Ein derartiges gefasstes Deckglas kann - trotz seines Namens - einen Grundkörper aus Glas oder Kunststoff aufweisen. Bei einem optischen Bauelement kann es sich beispielsweise um einen gefassten Filter, insbesondere ein Polarisationsfilter oder UV-Sperrfilter, oder eine gefasste Linse handeln. Bei dem gefassten Filter kann es sich beispielsweise um einen Vorsatzfilter, insbesondere einen Filterring, handeln.

Das Bauelement kann in einem Arbeitsgang hergestellt werden, da dessen Fassung nicht aus Einzelteilen zusammengesetzt werden muss. Ferner wird die Fertigung von Einzelteilen vermieden, da deren Gewinde aufeinander abgestimmt sein müssen. Aufgrund des Umspritzens des Grundkörpers und der formschlüssigen Verbindung zwischen der Fassung und dem Grundkörper wird ein Verrutschen des Grundkörpers unter allen Umständen verhindert. Aufgrund dessen wird eine hohe Stabilität des gesamten erfindungsgemäßen Bauelementes erreicht.

Die Erfindung umfasst ferner ein Verfahren zur Herstellung von Bauelementen und ist zur Herstellung eines Bauelementes geeignet. Es ist darüber hinaus zur Herstellung anderer Bauelemente geeignet. Insbesondere ist das erfindungsgemäße Verfahren zur Herstellung eines Bauelementes geeignet, das einen Grundkörper und eine Fassung aufweist, wobei der Grundkörper eine erste Fläche, eine von der ersten Fläche beabstandete zweite Fläche und einen Rand aufweist und die Fassung eine einstückige umspritzte Fassung aus einem starren Kunststoffmaterial ist, wobei die Fassung einen Innenrand aufweist, der an den Rand des Grundkörpers formschlüssig angrenzt. Es ist bei dem Bauelement nicht erforderlich, dass der Grundkörper an einer seiner beiden Flächen und an seinem Rand, aber nicht an der anderen Fläche von der Fassung umspritzt ist.

Daserfindungsgemäße Verfahren ermöglicht das Umspritzen beliebiger, in der Dicke schwankender Grundkörper, die beispielsweise aus bruchempfindlichen Materialien bestehen können. Der Grundkörper des Bauelementes kann beispielsweise aus Glas und/oder Kunststoff und/oder Keramik bestehen. Das erfindungsgemäße Verfahren ist somit auch zur Herstellung des in DE 10 2008 048 333 A1 beschriebenen Formkörpers geeignet.

Das erfindungsgemäße Verfahren ist insbesondere zur Herstellung von Bauelementen geeignet, die Grundkörper aufweisen, deren Dicke innerhalb von Toleranzgrenzen variiert. Das erfindungsgemäße Verfahren ermöglicht den Ausgleich von Dickentoleranzen des Grundkörpers. Dazu müssen keine Veränderungen an dem Spritzgießwerkzeug vorgenommen werden.

Das erfindungsgemäße Verfahren zum Herstellen eines Bauelementes mittels eines erfindungsgemäßen Spritzgießwerkzeuges, wobei das Bauelement ein Deckglas oder ein optisches Bauelement, das ein gefasster Filter ist, ist und wobei das Bauelement einen Grundkörper und eine Fassung aufweist, wobei der Grundkörper eine erste Fläche, eine von der ersten Fläche beabstandete zweite Fläche und einen Rand aufweist und die Fassung eine einstückige umspritzte Fassung aus einem starren Kunststoffmaterial ist, wobei die Fassung einen Innenrand aufweist, der an den Rand des Grundkörpers formschlüssig angrenzt, wobei das Verfahren die Schritte umfasst:
(i) Bereitstellen von zwei oder mehr Grundkörpern;
(ii) Bestimmen des oder der Grundkörper, die die geringste Dicke aufweisen, und Einstellen einer Spritzgießform einer Spritzgießmaschine auf eine minimale Dicke, die der geringsten Dicke entspricht;
(iii) Einführen eines der Grundkörper in die Spritzgießform einer Spritzgießmaschine;
(iv) Fixieren des eingeführten Grundkörpers in der Spritzgießform mittels Werkzeugelementen, wobei der Grundkörper an seinem Rand freiliegt;
(v) Einspritzen des Kunststoffmaterials in die Kavität, die von den Werkzeugelementen und dem eingeführten Grundkörper umgrenzt wird; und
(vi) Abkühlen des Kunststoffes unter Ausbildung der einstückigen umspritzten Fassung.

Anschließend kann das fertige Bauelement aus der Spritzgießmaschine entnommen werden. Die Schritte (iii) bis (vi) des erfindungsgemäßen Verfahrens können einmal oder mehrmals wiederholt werden, wobei die Zahl der Wiederholungen von der Zahl der Grundkörper abhängt, die in Schritt (i) bereitgestellt werden. Die Schritte (i) und (ii) müssen hingegen nicht wiederholt werden. Der Grundkörper wird vorzugsweise vor der Ausführung von Schritt (i) hergestellt. Das ist insbesondere dann zweckmäßig, wenn der Grundkörper ein Grundkörper aus Glas oder Keramik ist.

Die Spritzgießmaschine kann ein Zwei-Backen-Spritzgießwerkzeug aufweisen.Das Spritzgießwerkzeug weist ein erstes und zweites Werkzeugelement auf, zwischen denen die Spritzgießform ausgebildet ist und die in Schritt (iv) den eingelegten Grundkörper an der ersten oder zweiten oder an beiden Flächen kontaktieren. Beispielsweise kann das erste Werkzeugelement den Grundkörper an seiner zweiten Fläche kontaktieren, während das zweite Werkzeugelement den Grundkörper an seiner ersten Fläche kontaktiert. Die erste Fläche kann die freie Fläche sein. Das erste Werkzeugelement kann die Düsenseite des Spritzgießwerkzeuges bilden. Das zweite Werkzeugelement kann die Auswerferseite des Spritzgießwerkzeuges bilden. Das Spritzgießwerkzeug kann weitere Werkzeugelemente aufweisen.

In Schritt (i) des zweiten erfindungsgemäßen Verfahrens werden zwei oder mehr Grundkörper bereitgestellt. Die bereitgestellten zwei oder mehr Grundkörper werden im Folgenden als Serie von Grundkörpern oder als Serie bezeichnet. Die Grundkörper der Serie können im Vergleich zueinander gleiche oder unterschiedliche Dicken aufweisen. Es kann vorgesehen sein, dass zumindest einer der Grundkörper eine andere Dicke als ein anderer Grundkörper der Serie aufweist. Mehre Grundkörper der Serie können die gleiche Dicke aufweisen. Vorzugsweise weist jeder der Grundkörper eine Dicke auf, die in einem vorgegebenem Toleranzbereich liegt, das heißt, keiner der Grundkörper weist eine Dicke auf, die geringer als die minimale Dicke des Toleranzbereiches ist, und keiner der Grundkörper weist eine Dicke auf, die größer als die maximale Dicke des Toleranzbereiches ist.

Unter dem Begriff "Dicke" eines Grundkörpers kann dessen Ausdehnung zwischen seiner ersten und zweiten Fläche verstanden werden. Dabei werden die Dicken aller Grundkörper einer Serie vorzugsweise auf die gleiche Weise gemessen. Dazu kann vorgesehen sein, die Dicke jedes der Grundkörper an der gleichen Stelle, bezogen auf die ideale Gestalt des jeweiligen Grundkörpers, oder an der dicksten Stelle zu messen.

In Schritt (ii) wird anschließend die Dicke aller Grundkörper bestimmt. Dabei wird der Grundkörper ermittelt, der die geringste Dicke aufweist. Das ist die minimale Dicke der in Schritt (i) bereitgestellten Grundkörper. Es ist ferner möglich, aber nicht zwingend erforderlich, den Grundkörper zu bestimmen, der die größte Dicke aufweist. Das ist die maximale Dicke der in Schritt (i) bereitgestellten Grundkörper. Beispielsweise können die Grundkörper eine minimale Dicke von 1,8 mm und eine maximale Dicke von 2,2 mm aufweisen. In diesem Beispiel weisen die Grundkörper somit eine Dicke von 2 mm ± 0,2 mm auf. Die Dicke der Grundkörper der Serie legt somit in einem Toleranzbereich, der 1,8 mm bis 2,2 mm beträgt.

Vor dem Einführen des ersten Grundkörpers der Serie in die Spritzgießform einer Spritzgießmaschine (Schritt (iii)) wird das Spritzgießwerkzeug auf die minimale Dicke der Serie eingestellt (Schritt (ii)). Dieser Vorgang wird als Dickenvoreinstellung bezeichnet. Dazu kann die Spritzgießmaschine ein Stellelement, beispielsweise eine Schraubeinheit aufweisen. Mittels des Stellelementes kann die Abmessung der Spritzgießform, die zwischen dem ersten Werkzeugelement und dem zweiten Werkzeugelement ausgebildet ist, verändert werden. Das Stellelement kann beispielsweise manuell bedient werden.

Mittels des Stellelementes kann die Bewegung der beiden Werkzeugelemente aufeinander zu begrenzt werden. Beispielsweis kann vorgesehen sein, dass das erste Werkzeugelement (zum Beispiel die Düsenseite) ein unbewegliches Werkzeugelement ist und dass das zweite Werkzeugelement ein bewegliches Werkzeugelement (zum Beispiel die Auswerferseite) ist, das auf einer Achse auf das unbewegliche Werkzeugelement zu beweglich ist. Zur Dickenvoreinstellung, d. h. zur Einstellung des Spritzgießwerkzeuges auf die minimale Dicke der Serie kann mittels des Stellelementes die Bewegung des beweglichen Stellelementes begrenzt werden. Beispielsweise kann eine Maximalposition eingestellt werden, bis zu der das bewegliche Werkzeugelement maximal bewegt werden kann. Befindet sich das bewegliche Werkzeugelement in der Maximalposition sind das Spritzgießwerkzeug und mit ihm die Spritzgussform auf die minimale Dicke der Serie eingestellt.

Anschließend kann der erste Grundkörper der Serie in die Spritzgießform der Spritzgießmaschine eingelegt werden (Schritt (iii)). Bei dem ersten Grundkörper der Serie muss es sich nicht um das Grundelement der Serie handeln, das die minimale Dicke aufweist, auch wenn das möglich ist. Zum Einlegen des ersten Grundkörpers kann sich das Spritzgießwerkzeug beispielsweise hydraulisch oder elektrisch öffnen. Der eingeführte Grundkörper, der im Folgenden auch als Einlegeteil bezeichnet wird, kann in dem Spritzgießwerkzeug mittels Vakuum gehalten werden.

Nach dem Einführen des ersten Grundkörpers schließt sich das Spritzgießwerkzeug wieder. Dabei wird der eingeführte Grundkörper in der Spritzgießform mittels der beiden Werkzeugelemente fixiert, wobei der Grundkörper an seinem Rand freiliegt (Schritt (iv)). Dazu fährt das bewegliche Werkzeugelement auf eine Fläche des ersten Grundkörpers zu, bis es diese Fläche erreicht. Diese Position, in der das bewegliche Werkzeugelement die Fläche des ersten Grundkörpers kontaktiert, wird im Folgenden auch als Kontaktposition bezeichnet.

Die Kontaktposition entspricht der Maximalposition, wenn der erste Grundkörper ein Grundkörper der Serie ist, der die minimale Dicke aufweist. Weist der erste Grundköper jedoch eine größere Dicke als die minimale Dicke auf, so gelangt das bewegliche Element bereits in Kontakt mit der Fläche des ersten Grundkörpers, bevor es die Maximalposition erreicht hat. Mittels der Dickenvoreinstellung wird zwar sichergestellt, dass das bewegliche Werkzeugelement nur so weit auf die Fläche des ersten Grundkörpers zu bewegt wird, dass es in der Maximalposition gerade die Fläche des ersten Grundkörpers berührt, ohne dabei Druck auf ihn auszuüben. Das gilt jedoch nur, wenn der erste Grundkörper der Grundkörper mit der minimalen Dicke ist. Weist der erste Grundkörper jedoch eine größere Dicke auf, so wird eine weitere Bewegung des beweglichen Werkzeugelementes aus der Kontaktposition in die Maximalposition mittels eines Dickenausgleichelementes verhindert, das Bestandteil des Spritzgießwerkzeuges ist. Mittels des Dickenausgleichelementes wird die Differenz zwischen der minimalen Dicke, die mittels des Stellelementes eingestellt ist, und der tatsächlichen Dicke des Einlegeteils von dem Spritzgießwerkzeug ausgeglichen.

Bei dem Dickenausgleichselement kann es sich beispielsweise um ein Federelement, beispielsweise eine Druckfeder oder ein Federpaket, das mehrere Federn, z. B. mehrere Druckfedern enthalten kann, handeln. Das Dickenausgleichselement kann die Kraft, die auf das bewegliche Werkzeugelement ausgeübt wird, um es in Richtung seiner Maximalposition zu bewegen, aufnehmen, sobald das bewegliche Werkzeugelement auf die Fläche des Grundkörpers auftrifft. Die Bewegung des beweglichen Werkzeugelementes stoppt dabei, ohne dass das Einlegeteil beschädigt wird. Mittels des Dickenausgleichselementes wird somit eine weitere Bewegung des beweglichen Werkzeugelementes auf die Fläche des Grundkörpers, die zu einer Zerstörung des Einlegeteiles führen würde, verhindert. Das Dickenausgleichselement bewirkt somit ein Stoppen des beweglichen Werkzeugelementes in der Kontaktposition.

Das bewegliche Werkzeugelement dichtet außerdem die Spritzgussform ab, sobald es die Kontaktposition erreicht hat.

Vor dem Einspritzen des Kunststoffmaterials in die Kavität, die von den beiden Werkzeugelementen und dem Grundkörper umgrenzt wird (Schritt (v)), wird das bewegliche Werkzeugelement in der Kontaktposition fixiert. Dazu kann das Spritzgießwerkzeug ein Verriegelungselement aufweisen. Das Verriegelungselement verhindert eine Bewegung des fixierten beweglichen Werkzeugelementes, insbesondere unter Einwirkung des Druckes, den der in die Kavität eintretende Kunststoff auf das bewegliche Werkzeugelement ausübt. Nach dem Fixieren des beweglichen Werkzeugelementes in der Kontaktposition kann das Kunststoffmaterial in die Kavität eingespritzt werden (Schritt (v)).

Alternativ oder zusätzlich zu einem Verriegelungselement kann eine mechanische, elektrische, hydraulische und/oder pneumatische Verriegelung vorgesehen sein. Beispielsweise kann eine Verriegelungseinheit vorgesehen sein, die eine mechanische, elektrische, hydraulische und/oder pneumatische Verriegelung und damit eine Fixierung des beweglichen Werkzeugelementes in der Kontaktposition bewirkt.

Bei dem Verriegelungselement kann es sich beispielsweise um einen Keil handeln. Der Keil kann in einer Richtung, die als Erstreckungsrichtung bezeichnet wird, beweglich sein, die orthogonal zur Bewegungsrichtung des beweglichen Werkzeugelementes ist. Der Keil kann sich in seiner Erstreckungsrichtung verjüngen, so dass seine Dicke zunimmt. Der Keil kann an dem beweglichen Werkzeugelement, beispielsweise an dessen Rückseite, die dem unbeweglichen Werkzeugelement abgewandt ist, und an einem Anschlag anliegen. Der Abstand zwischen dem beweglichen Werkzeugelement und dem Anschlag wird von der Kontaktposition des beweglichen Werkzeugelementes bestimmt. Der Abstand ist um so größer, je geringer die Dicke des Einlegeteils ist. Der Abstand ist am größten, wenn das Einlegeteil die minimale Dicke der Serie aufweist. Der Keil wird entlang seiner Erstreckungsrichtung, so bewegt, dass er die Dicke des Einlegeteils mit seiner Dicke ausgleicht.

Beim Abkühlen des Kunststoffs härtet das Kunststoffmaterial aus, wodurch die Fassung erhalten wird (Schritt (vi)). Nach dem Abkühlen des Kunststoffes unter Ausbildung der einstückigen umspritzten Fassung (Schritt (vi), kann die Fixierung des beweglichen Einlegeteils, die mittels des Verriegelungselementes bewirkt wurde, gelöst werden. Dazu kann beispielsweise der Keil entfernt werden. Anschließend kann das bewegliche Werkzeugelement aus der Kontaktposition zurückgefahren werden. Das Spritzgießwerkzeug öffnet, und das Bauelement kann aus der Spritzgussform entnommen werden. Anschließend können die Schritte (iii) bis (vi) mit einem zweiten Grundkörper und sodann für jeden weiteren Grundkörper der Serie von Grundkörpern wiederholt werden.

Nach Maßgabe der Erfindung ist ferner ein Spritzgießwerkzeug für eine Spritzgießmaschine vorgesehen. Das Spritzgießwerkzeug weist ein erstes Werkzeugelement und ein zweites Werkzeugelement, das zu dem ersten Werkzeugelement hin beweglich ist, auf. Das Spritzgießwerkzeug weist ferner ein Stellelement, das die Bewegung des zweiten Werkzeugelementes auf eine Maximalposition begrenzt, und ein Dickenausgleichselement auf, das die Bewegung des zweiten Werkzeugelementes auf eine Kontaktposition begrenzt, in der das zweite Werkzeugelement eine Fläche eines zu umspritzenden Grundkörpers kontaktiert. Das erste Werkzeugelement kann die Düsenseite des Spritzgießwerkzeuges bilden. Das zweite Werkzeugelement kann die Auswerferseite des Spritzgießwerkzeuges bilden.

Mit dem Stellelement des erfindungsgemäßen Spritzgießwerkzeuges kann an diesem die minimale Dicke eingestellt werden. Das Stellelement kann somit den Verfahrweg des zweiten Werkzeugelementes des Spritzgießwerkzeugs derart begrenzen, dass das zweite Werkzeugelement nicht über die Maximalposition hinaus auf das erste Werkezugelement zubewegt werden kann. Weist ein Grundkörper eine größere Dicke als die minimale Dicke auf, so kann die Dickendifferenz dieses Grundkörpers zur minimalen Dicke mittels des Dickenausgleichselementes in dem Spritzgießwerkzeug aufgenommen werden. Befindet sich das zweite Werkzeugelement in der Kontaktposition, die auch als Endlage bezeichnet werden kann, kann dann das zweite Werkzeugelement mittels eines Verriegelungselementes in seiner Position verriegelt werden. Anschließend kann der Spritzdruck aufgebaut werden.

Das erfindungsgemäße Spritzgießwerkzeug kann somit auf die geringste Dicke des oder der Grundkörper einer Serie von Grundkörpern voreingestellt werden. Sollten Toleranzen einer oder mehrerer der Grundkörper der Serie zu einer größeren Dicke eines eingeführten Grundkörpers führen, so können diese Toleranzen über das Dickenausgleichselement im Spritzgießwerkzeug aufgenommen werden. Die Bewegung des zweiten Werkzeugelementes stoppt somit vor Erreichen der Maximalposition. Sie kann in entgegengesetzter Richtung zur Fläche des Grundkörpers gehen.

Das erfindungsgemäße Spritzgießwerkzeug weist ein oder mehrere Stellelemente auf. Das erfindungsgemäße Spritzgießwerkzeug weist ein oder mehrere Dickenausgleichselemente auf. Das erfindungsgemäße Spritzgießwerkzeug kann ein oder mehrere Verriegelungselemente und/oder Verriegelungseinheiten aufweisen.

Weitere Merkmale und Einzelheiten des Spritzgießwerkzeuges sind vorstehend bereits im Zusammenhang mit dem erfindungsgemäßen Verfahren erläutert worden. Bei der Spritzgießmaschine kann es sich, abgesehen von den Merkmalen des obenbeschriebenen Spritzgießwerkzeuges, um eine an sich bekannte Spritzgießmaschine handeln.

Die Ausdrücke "Spritzwerkzeug" und "Spritzgießwerkzeug" werden in der vorliegenden Erfindung synonym verwendet.

Die Erfindung wird nachstehend anhand eines Ausführungsbeispiels, das die Erfindung nicht einschränken soll, unter Bezugnahme auf die Zeichnungen näher erläutert. Dabei zeigen
Fig. 1 eine perspektivische Darstellung einer ersten Ausführungsform eines ersten Bauelementes mit Blick auf die Rückseite des Grundkörpers;
Fig. 2 eine Ansicht des in Fig. 1 gezeigten Bauelementes mit Blick auf die Vorderseite des Grundkörpers;
Fig. 3 eine Schnittdarstellung des in Fig. 1 gezeigten Bauelementes entlang der Linie A-A;
Fig. 4 eine Detaildarstellung des Ausschnittes Y von Fig. 2;
Fig. 5 eine perspektivische Darstellung des Grundkörpers des in Fig. 1 gezeigten Bauelementes;
Fig. 6 eine perspektivische Darstellung eines zweiten Bauelementes mit Blick auf die Vorderseite des Grundkörpers;
Fig. 7 eine perspektivische Darstellung des Grundkörpers des in Fig. 6 gezeigten Bauelementes;
Fig. 8 eine Schnittdarstellung des Ausschnittes Z von Fig. 6;
Fig. 9 eine schematische Darstellung eines Spritzgießwerkzeuges zur Herstellung eines zweiten Bauelementes;
Fig. 10 eine weitere schematische Darstellung des in Fig. 9 gezeigten Spritzgießwerkzeuges, wobei ein erster Grundkörper einer Serie von dem Werkzeug gehalten wird; und
Fig. 11 eine weitere schematische Darstellung des in Fig. 9 gezeigten Spritzgießwerkzeuges, wobei ein zweiter Grundkörper der Serie von dem Werkzeug gehalten wird.

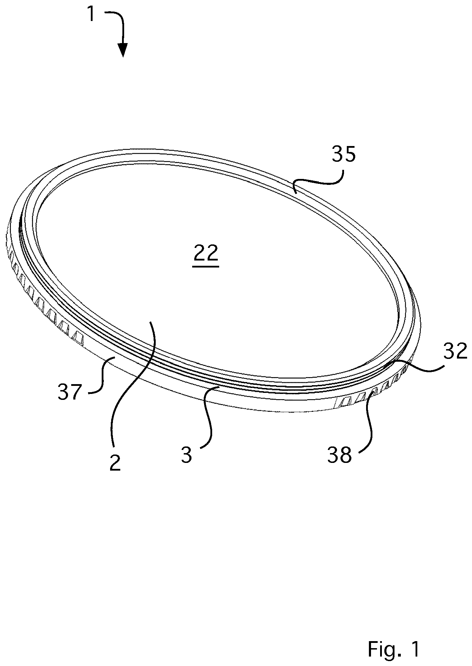

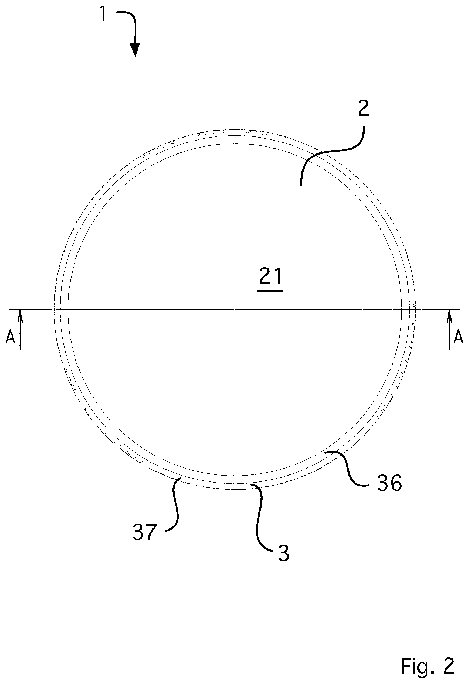

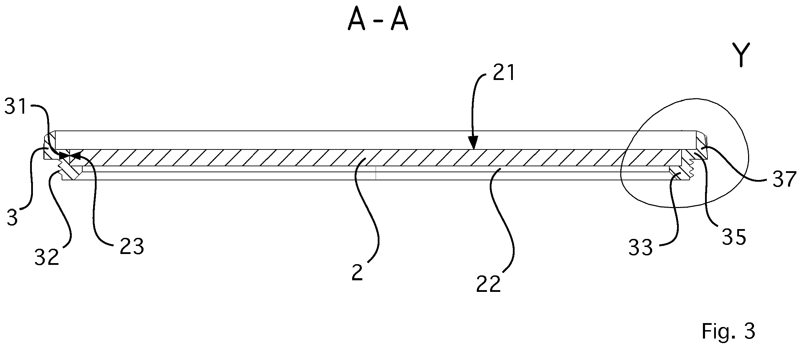

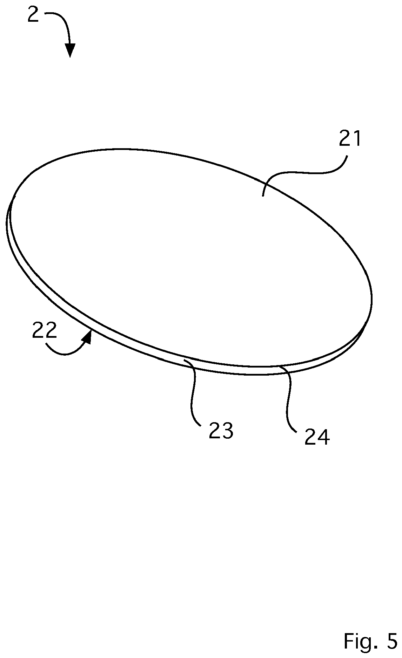

Die Figuren 1 bis 5 zeigen ein Bauelement 1 aus einem Grundkörper 2, der von einer umspritzten, einstückigen Fassung 3 gehalten ist (Fig. 1). Der Grundkörper (Fig. 5) weist eine erste Fläche 21 und eine zweite Fläche 22 auf, die von der ersten Fläche 21 unter Ausbildung des Randes 23 beabstandet ist. Zwischen der ersten Fläche 21 und dem Rand 23 ist eine Kante 24 ausgebildet. Der in Fig. 5 gezeigte Grundkörper 2 ist eine Glasplatte mit kreisförmigem Querschnitt, wobei der Grundkörper 2 auch aus einem anderen Material bestehen kann. Die Flächen 21, 22 des Grundkörpers 2 sind flach, wobei eine oder mehrere Unregelmäßigkeiten in den Flächen 21, 22 und dem Rand 23 ausgebildet sein können. Die Glasplatte hat eine annähernd kreiszylinderförmige Grundform, wobei fertigungsbedingte Abweichungen von der Idealgeometrie vorhanden sein können. Der Rand 23 bildet die Mantelfläche des Zylinders. Im Folgen wird die erste Fläche 21 auch als Vorderseite und die zweite Fläche 22 auch als Rückseite bezeichnet.

Die Fassung 3 besteht aus Polyamid 6, das mit 30 Gew.-% Glaskugeln gefüllt ist (vertrieben unter der Bezeichnung "Akromid B3 GK 30" von Akro-Plastic GmbH, Niederzissen, DE). Die Fassung 3 hat eine annähernd ringförmige geometrische Grundgestalt. Die Fassung weist einen Innenrand 31, der formschlüssig an den Rand 23 des Grundkörper 2 angrenzt, und einen Außenrand 32, in dem ein Außengewinde 39 ausgebildet ist, auf. An den Innenrand 31 grenzt ein umlaufender erster Steg 33 an, der eine Oberfläche 34 aufweist, auf der der Grundkörper 2 mit einer Rückseite 22 aufliegt. Die Oberfläche 34 des ersten Steges 33 erstreckt sich in orthogonaler Richtung zum Innenrand 31 der Fassung 3. Der Grundkörper 2 steht somit nur an seinem Rand 23 und an seiner Rückseite 22 mit der Fassung 3 in Kontakt. An seiner Vorderseite 21 kontaktiert die Fassung 3 den Grundkörper 2 nicht. Damit kann der Grundkörper 2 an seiner Vorderseite 21 freiliegen.

Die Fassung 3 weist einen umlaufenden zweiten Steg 35 auf, der sich vom Außenrand 32 der Fassung 3 in eine dem Grundkörper 2 abgewandte Richtung, also nach außen, erstreckt. Der zweite Steg 35 erstreckt sich dabei vorzugsweise in orthogonaler Richtung zum Innenrand 31. Der zweite Steg 35 weist eine Oberfläche 36 auf, die bündig zur Kante 24 zwischen der Vorderseite 21 und dem Rand 23 des Grundkörpers 2 liegt. Der zweite Steg 35 weist ein Ende auf, das dem Grundkörper 2 abgewandt ist. Von diesem Ende steht ein umlaufender dritter Steg 37 vom zweiten Steg 35 ab, wobei der dritte Steg 37, bezogen auf den zweiten Steg 35, in entgegengesetzter Richtung zum Innenrand 31 vom zweiten Steg 35 absteht. Dabei kann zwischen der Oberfläche 36 des zweiten Steges 35 und der dieser Oberfläche 36 zugewandten Oberfläche des dritten Steges 37 ein rechter Winkel ausgebildet sein. Der dritte Steg 37 bewirkt ein Überstehen der Fassung 3 über die Vorderseite 21 des Grundkörpers 2, ohne dass die Vorderseite 21 die Fassung 3 kontaktiert. In der Oberfläche des dritten Steges 37, die der Oberfläche 36 des zweiten Steges 35 abgewandt ist, kann eine umlaufende Riffelung 38 vorgesehen sein, die das Ein- und Ausschrauben des Bauelementes 1 erleichtern kann.

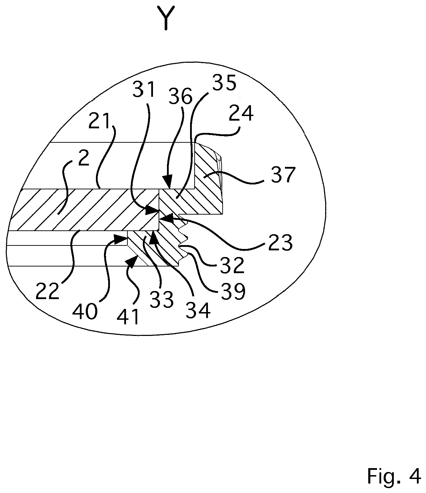

Es ist insbesondere in Fig. 4 zu erkennen, dass sich der erste Steg 33, der sich vom Innenrand 31 unter Ausbildung der Oberfläche 34, auf der der Grundkörper 2 mit seiner Rückseite 22 aufliegt, nach innen erstreckt. Der Steg 33 weist einen ersten Teilrand 40 auf, der orthogonal von der Oberfläche 34 absteht. An den ersten Teilrand 40 grenzt ein zweiter Teilrand 41 an, der in einem Winkel zum ersten Teilrand 40 verläuft, wodurch sich die Fassung zum Außenrand 32 hin verjüngt. Der Innenrand 31 der Fassung 3 erstreckt sich von der Oberfläche 34 des ersten Stegs 33 bis zur Oberfläche 36 des zweiten Stegs. Er liegt bündig an dem Rand 23 des Grundkörpers 2 an, steht aber nicht über diesen hinaus, und zwar weder an dessen Vorderseite 21 noch an dessen Rückseite 22.

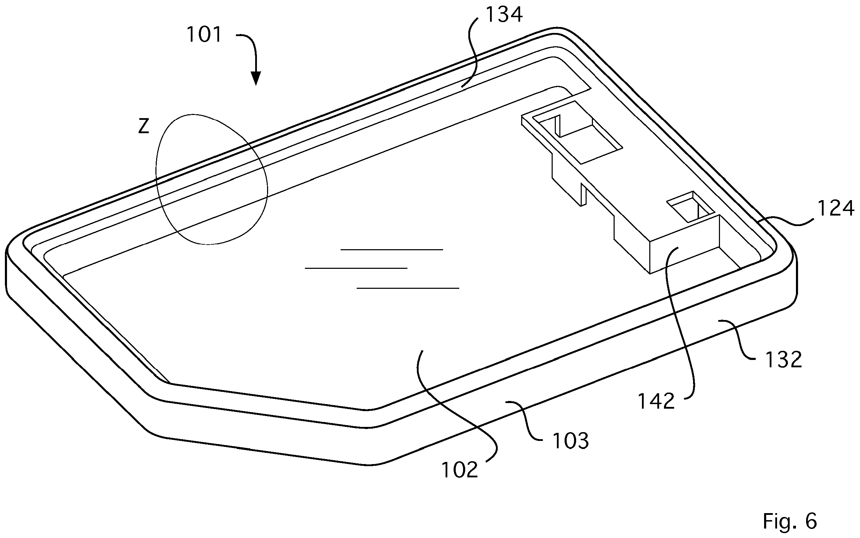

Es sollte angemerkt werden, dass die Fassung des Bauelementes 1 auch eine andere Kontur aufweisen kann (siehe Fig. 6), solange sichergestellt ist, dass der Grundkörper 2 nur an einer Fläche am Rand in Kontakt mit der Fassung steht. Der Grundkörper 2 ist damit nur einseitig gefasst.

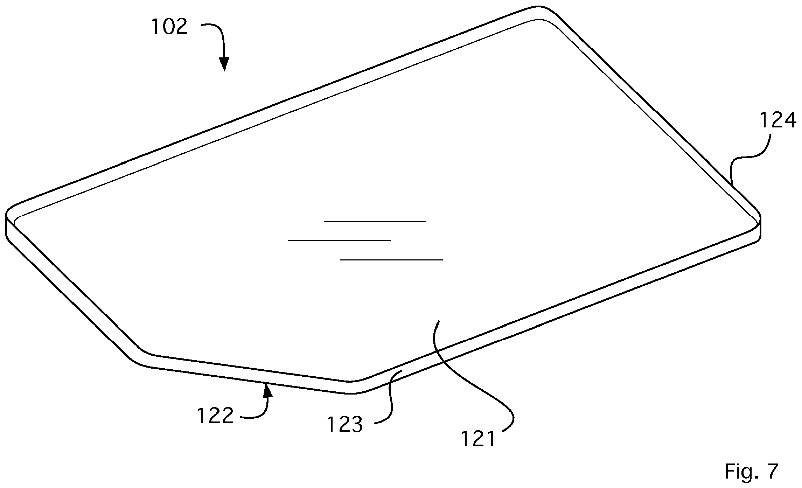

Fig. 6 zeigtein weiteres Bauelement 101, das ein gefasstes Deckglas ist, das beispielsweise zum Abdecken des Instrumentenbereiches eines Kraftfahrzeuges verwendet werden kann. Dieses Bauelement 101 weist einen Grundkörper 102 und eine Fassung 103 auf. Der Grundkörper 102 ist eine transparente Platte mit einer ersten Fläche 121 und einer zweiten Fläche 122, die von der ersten Fläche 121 unter Ausbildung eines Randes 123 beabstandet ist. Zwischen der ersten Fläche 121 und dem Rand 123 ist eine Kante 124 ausgebildet. Es ist in Fig. 7 zu erkennen, dass der Grundkörper 102 eine unregelmäßige Kontur besitzt. Die Flächen 121, 122 sind flach, wobei eine oder mehrere Unregelmäßigkeiten in den Flächen 121, 122 und dem Rand 123 ausgebildet sein können. Die erste Fläche 121 und die zweite Fläche 122 verlaufen parallel zueinander, so dass der Grundkörper 102 eine gleichmäßige Dicke aufweist, wobei fertigungsbedingte Abweichungen von der Idealgeometrie vorhanden sein können. Im Folgen wird die erste Fläche 121 auch als Vorderseite und die zweite Fläche 122 auch als Rückseite bezeichnet.

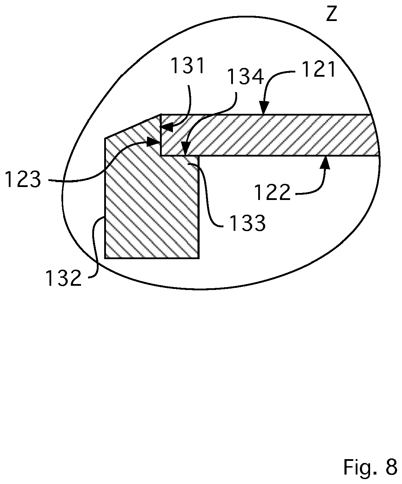

Die Fassung 103 weist einen Innenrand 131, der formschlüssig an den Rand 123 des Grundkörpers 102 angrenzt, und einen Außenrand 132 auf. An den Innenrand 131 grenzt ein umlaufender erster Steg 133 an, der eine Oberfläche 134 aufweist, auf der der Grundkörper 102 mit seiner Rückseite 122 aufliegt (siehe auch Fig. 8). Die Oberfläche 134 des ersten Steges 133 erstreckt sich in orthogonaler Richtung zum Innenrand 131 der Fassung 103. Der Grundkörper 102 steht somit nur an seinem Rand 123 und an seiner Rückseite 122 mit der Fassung 103 in Kontakt. An seiner Vorderseite 121 kontaktiert die Fassung 103 den Grundkörper 2 nicht. Damit kann der Grundkörper 102 an seiner Vorderseite 121 freiliegen. Der Innenrand 131 der Fassung 103 erstreckt sich von der Oberfläche 134 des ersten Stegs 133 bis zur Kante 124. Er liegt bündig an dem Rand 123 des Grundkörpers 102 an, steht aber nicht über diesen hinaus, und zwar weder an dessen Vorderseite 121 noch an dessen Rückseite 122. Es ist in den Fig. 6 und 8 zu erkennen, dass die Fassung 103 an der Vorderseite 121 des Grundkörpers 102 nicht über diesen hinaussteht, sondern bündig mit der Vorderseite 121 abschließt. Es ist in Fig. 6 zu erkennen, dass an der Fassung 103 weitere Ausformungen 142 ausgebildet sein können, wobei in dem in Fig. 6 gezeigten Beispiel eine solche Ausformung an der Innenseite der Fassung 103 derart ausgebildet ist, dass sie sich unterhalb der Rückseite 122 des Grundkörpers 102 befindet.

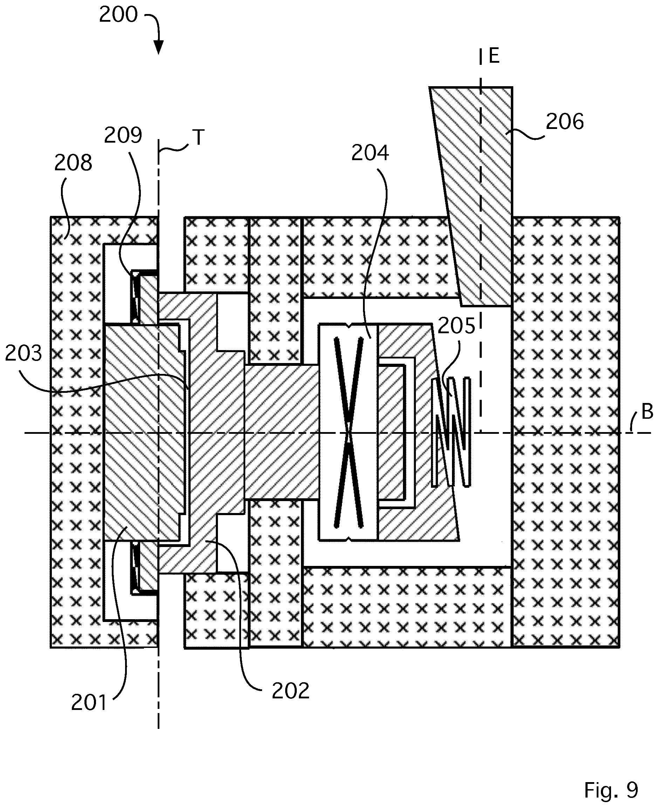

Mit Bezug auf die Figuren 9 bis 11 wird im Folgenden das erfindungsgemäße Verfahren zur Herstellung eines Bauelementes beschrieben.

Fig. 9 zeigt ein Spritzgießwerkzeug 200, das ein unbewegliches Werkzeugelement 201 und ein bewegliches Werkzeugelement 202 aufweist. Das bewegliche Werkzeugelement 202 ist entlang einer Achse B bewegbar. In Fig. 9 befindet sich das bewegliche Werkzeugelement in seiner Maximalposition, d. h. die Abmessung der Spritzgießform 203, die zwischen den beiden Werkzeugelemente 201 und 202 ausgebildet ist, weist die minimale Dicke auf. Zum Einstellen der minimalen Dicke weist das Spritzgießwerkzeug ein Stellelement 204 auf, das die Bewegung des zweiten Werkzeugelementes auf die Maximalposition begrenzt. Das Stellelement 204 kann Teil des beweglichen Werkzeugelementes 202 sein.

Die Spritzgießform 203 ist in Fig. 9 im geschlossenen, abgedichteten Zustand gezeigt. Die Spritzgießform 203 kann entlang der Trennebene T geöffnet werden, beispielsweise hydraulisch oder elektrisch. Dazu wird das bewegliche Werkzeugelement 202 entlang Achse B von dem unbeweglichen Werkzeugelement 201 wegbewegt. Die Spritzgießform 203 kann geschlossen werden, indem das bewegliche Werkzeugelement 202 zu dem unbeweglichen Werkzeugelement 201 hin bewegt wird, bis es - sofern sich kein Grundkörper 2, 102 mit einer Dicke, die größer als die minimale Dicke ist, in der Spritgießform 203 befindet - seine Maximalposition erreicht hat. Dieser Zustand ist in Fig. 9 gezeigt.

Außerdem weist das Spritzgießwerkzeug 200 ein Dickenausgleichselement 205 auf. Das Dickenausgleichselement 205, das zwischen dem beweglichen Werkzeugelement 202 und einem unbeweglichen Element des Spritzgießwerkzeuges 200 ausgebildet sein kann, nimmt die Kraft auf, die auf das bewegliche Werkzeugelement 202 ausgeübt wird, sobald es die Kontaktposition erreicht hat. Damit stoppt das Dickenausgleichselement 205 die Bewegung des beweglichen Werkzeugelementes 202 in der Kontaktposition.

Zur Fixierung des beweglichen Werkzeugelementes 202 in der Kontaktposition ist ein keilförmiges Verriegelungselement 206 vorgesehen. Das Verriegelungselement wirkt mit dem beweglichen Werkzeugelement 202 zusammen. Es kann an dem beweglichen Werkzeugelement 202 anliegen und aufgrund seiner Form die Differenz zwischen der Maximalposition und der Kontaktposition des beweglichen Werkzeugelementes 202 ausgleichen. Dazu kann das Verriegelungselement 206 entlang seiner Erstreckungsrichtung E, die orthogonal zur Achse B liegt, bewegt werden. In Fig. 9 ist das keilförmige Verriegelungselement 206 in einer Position gezeigt, in der es das bewegliche Werkzeugelement 202 nicht verriegelt. Die Spritzgießform 203 kann somit geöffnet werden.

Das Spritzgießwerkzeug 200 weist einen Rahmen 208 auf, an das das unbewegliche Werkzeugelement 201 starr befestigt ist. Das bewegliche Werkzeugelement 202 und das Verriegelungselement 206 sind von dem Rahmen 208 gehalten, wobei das bewegliche Werkzeugelement 202 entlang der Achse B und das Verriegelungselement 206 entlang seiner Erstreckungsrichtung E beweglich sind. An dem Rahmen 208 kann ferner das unbewegliche Element des Spritzgießwerkzeuges 200 ausgebildet sein, an dem das Dickenausgleichselement 205 abgestützt ist. Bei dem unbeweglichen Element kann es sich um den Rahmen 208 selbst handeln. Das Spritzgießwerkzeug 200 kann zusätzlich zu dem Dickenausgleichselement 205 weitere Dickenausgleichselemente 209 aufweisen, beispielsweise um den Druck des in die Spritzgießform 203 einströmenden Kunststoffes zusätzlich ausgleichen zu können.

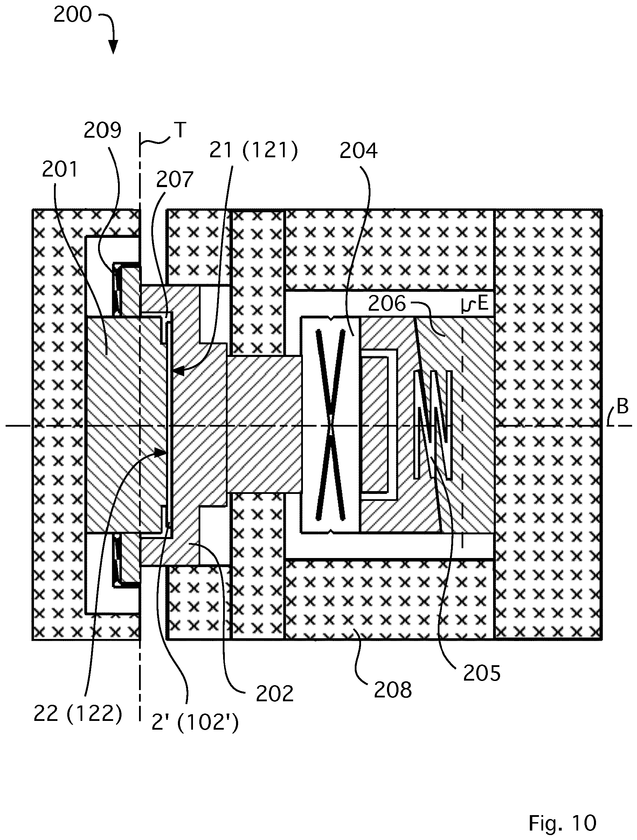

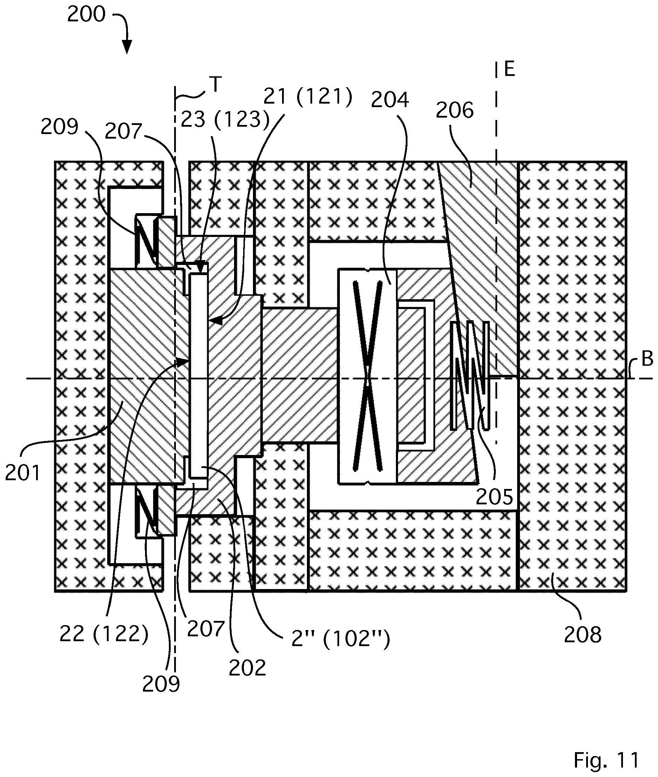

Die Figuren 10 und 11 zeigen das in Fig. 9 dargestellte Spritzgießwerkzeug 200, in dessen Spritzgießform 203 jeweils ein Grundkörper 2', 2" bzw. 102', 102" eingelegt ist, je nach ob es sich ein in den Figuren 1 bis 6 dargestelltes Grundelement 2 oder um ein in den Figuren 7 und 8 dargestelltes Grundelement 102 handelt. Es ist zu erkennen, dass der in Fig. 10 gezeigte Grundkörper 2', 102' eine geringere Dicke als der in Fig. 11 gezeigte Grundkörper 2", 102" aufweist. Beide Grundkörper 2', 2" bzw. 102', 102" gehören zu einer Serie von Grundkörpern 2, 102, die mittels des Spritzgießwerkzeuges 200 umspritzt werden können, obwohl sie unterschiedliche Dicken aufweisen. Der Grundkörper 2', 102' weist die minimale Dicke der Serie auf, d. h., dass sich das bewegliche Werkzeugelement 202 in der Maximalposition befindet, wenn es die erste Fläche 21, 121 des Grundkörpers 2', 102' kontaktiert. Dieser Zustand des Spritzgießwerkzeuges 200 ist in Fig. 10 gezeigt. In diesem Zustand entspricht die Maximalposition der Kontaktposition. Bei dem dickeren Grundkörper 2", 102" stoppt das bewegliche Werkzeugelement 202, bevor es die Maximalposition erreicht. Dieser Zustand des Spritzgießwerkzeuges 200 ist in Fig. 10 gezeigt. Mittels des Dickenausgleichselementes 205 wird die Dickendifferenz zwischen den Grundkörpern 2', 2" bzw. 102', 102" der Serie von Grundkörpern 2, 102 ausgeglichen. Vor dem Einspritzen von Kunststoff in die Kavität 207 der Spritzgießform 203 wird das bewegliche Werkzeugelement 202 mittels des Verriegelungselementes 206 in der Kontaktposition fixiert. Es ist in den Figuren 10 und 11 zu erkennen, dass aufgrund der keilförmigen Ausbildung des Verriegelungselementes 206 die Differenz zwischen der Maximalposition und der Kontaktposition ausgeglichen wird.

Es ist in den Figuren 10 und 11 zu erkennen, dass das zweite Werkzeugelement 202 die erste Fläche 21, 121 des Grundkörpers 2', 2" bzw. 102', 102" vollständig bedeckt. Die Kavität 207 wird von Rand 23, 223 des Grundkörpers 2', 2" bzw. 102', 102" und einen Teil der zweiten Fläche 22, 122 des Grundkörpers 2', 2" bzw. 102', 102" sowie dem ersten und zweiten Werkzeugelement 201, 202 begrenzt. Außer diesem Grund gelangt der eingespritzte Kunststoff nicht in Kontakt mit der ersten Fläche 21, 121 des Grundkörpers 2', 2" bzw. 102', 102", so dass das fertige Bauelement 1, 101 an seiner ersten Fläche 21, 121 freiliegt.

### Bezugszeichenliste

- 1: Bauelement
- 2: Grundkörper
- 3: Fassung

- 21: erste Fläche
- 22: zweite Fläche
- 23: Rand
- 24: Kante

- 31: Innenrand
- 32: Außenrand
- 33: erster Steg
- 34: Oberfläche
- 35: zweiter Steg
- 36: Oberfläche
- 37: dritter Steg
- 38: Riffelung
- 39: Außengewinde
- 40: erster Teilrand
- 41: zweiter Teilrand

- 101: Bauelement
- 102: Grundkörper
- 103: Fassung

- 121: erste Fläche
- 122: zweite Fläche
- 123: Rand
- 124: Kante
- 131: Innenrand
- 132: Außenrand
- 133: erster Steg
- 134: Oberfläche
- 142: Ausformung

- 200: Spritzgießwerkzeug
- 201: unbewegliches Werkzeugelement
- 202: bewegliches Werkzeugelement
- 203: Spritzgießform
- 204: Stellelement
- 205: Dickenausgleichselement
- 206: Verriegelungselement
- 207: Kavität
- 208: Rahmen
- 209: Dickenausgleichselement

## Patentansprüche

1. Spritzgießwerkzeug für eine Spritzgießmaschine, wobei das Spritzgießwerkzeug (200) zur Herstellung eines Bauelementes ein erstes Werkzeugelement (201) und ein zweites Werkzeugelement (202), das zu dem ersten Werkzeugelement (201) hin beweglich ist, aufweist, wobei das Bauelement ein Deckglas oder ein optisches Bauelement, das ein gefasster Filter ist, ist und einen Grundkörper (102) und eine Fassung (103) aufweist, wobei der Grundkörper (102) ein Grundkörper aus Glas oder Kunststoff ist und eine erste Fläche, eine von der ersten Fläche beabstandete zweite Fläche und einen Rand aufweist und die Fassung (103) eine einstückige umspritzte Fassung aus einem starren Kunststoff ist, die einen Innenrand aufweist, der an den Rand des Grundkörpers formschlüssig angrenzt und an einer seiner beiden Flächen, aber nicht an die andere Fläche angrenzt, wobei das Spritzgießwerkzeug aufweist:
- einen Rahmen (208), an dem das erste Werkzeugelement (201) starr befestigt ist und von dem das zweite Werkzeugelement (202) beweglich gehalten ist;
- ein Stellelement (204), das die Bewegung des zweiten Werkzeugelementes (202) zu dem ersten Werkzeugelement (201) hin auf eine Maximalposition begrenzt, bis zu der das zweite Werkzeugelement maximal bewegt werden kann, und bei der die Abmessung der Spritzgießform, die zwischen den beiden Werkzeugelementen ausgebildet ist, die minimale Dicke aufweist, wobei das Stellelement (204) Teil des zweiten Werkzeugelementes (202) ist,
- ein Dickenausgleichselement (205), das zwischen dem zweiten Werkzeugelement (202) und einem unbeweglichen Element ausgebildet ist, das an dem Rahmen (208) angeordnet und an dem das Dickenausgleichselement (205) abgestützt ist, und das die Bewegung des zweiten Werkzeugelementes (202) auf eine Kontaktposition begrenzt, in der das zweite Werkzeugelement (202) eine Fläche des zu umspritzenden Grundkörpers (102) des Bauelementes kontaktiert, wobei das Dickenausgleichselement (205) die Kraft, die auf das zweite Werkzeugelement (202) ausgeübt wird, um es in Richtung seiner Maximalposition zu bewegen, aufnehmen kann, sobald das zweite Werkzeugelement (202) auf die Fläche des Grundkörpers (101) auftrifft, wobei das Dickenausgleichselement die Bewegung des beweglichen Werkzeugelements in der Kontaktposition stoppt, und
- eine Kavität (207), die von den Werkzeugelementen (201, 202) und dem Grundkörper (101) umgrenzt und in Kunststoff zur Ausbildung der Fassung (103) eingespritzt wird.

2. Spritzgießwerkzeug nach Anspruch 1, **dadurch gekennzeichnet, dass** das Stellelement (204) eine Schraubeinheit zur Veränderung der Abmessung der Spritzgießform (203), die zwischen dem ersten Werkzeugelement (201) und dem zweiten Werkzeugelement ausgebildet ist (202), ist.

3. Spritzgießwerkzeug nach einem der vorstehenden Ansprüche, **dadurch gekennzeichnet, dass** das Dickenausgleichselement (205) ein Federelement ist.

4. Spritzgießwerkzeug nach einem der vorstehenden Ansprüche, **dadurch gekennzeichnet, dass** das Dickenausgleichelement (205) die Differenz zwischen der minimalen Dicke, die mittels des Stellelementes (204) eingestellt ist, und der tatsächlichen Dicke des Grundköpers (101) ausgleicht.

5. Spritzgießwerkzeug nach einem der vorstehenden Ansprüche, **dadurch gekennzeichnet, dass** der Grundkörper (102) mittels Vakuum in einer Spritzgießform (203) gehalten ist.

6. Spritzgießwerkzeug nach einem der vorstehenden Ansprüche, **dadurch gekennzeichnet, dass** das zweite Werkzeugelement (202) eine Spritzgießform (203) abdichtet, sobald es die Kontaktposition erreicht hat.

7. Spritzgießwerkzeug nach einem der vorstehenden Ansprüche, **dadurch gekennzeichnet, dass** es ein Verriegelungselement (206) zur Verhinderung einer Bewegung des fixierten zweiten Werkzeugelementes (202) aufweist.

8. Spritzgießwerkzeug nach einem der vorstehenden Ansprüche, **dadurch gekennzeichnet, dass** das Verriegelungselement (206) ein Keil ist.

9. Spritzgießwerkzeug nach Anspruch 8, **dadurch gekennzeichnet, dass** der Keil in einer Richtung beweglich ist, die orthogonal zur Bewegungsrichtung des zweiten Werkzeugelementes (202) ist.

10. Verfahren zur Herstellung eines Bauelementes (1, 101) mittels eines Spritzgießwerkzeuges nach einem der Ansprüche 1 bis 9, wobei das Bauelement ein Deckglas oder ein optisches Bauelement, das ein gefasster Filter ist, ist und wobei das Bauelement einen Grundkörper (2, 102) und eine Fassung (3, 103) aufweist, wobei der Grundkörper (2, 102) eine erste Fläche (21, 121), eine von der ersten Fläche (21, 121) beabstandete zweite Fläche (22, 122) und einen Rand (23, 123) aufweist und die Fassung (3, 103) eine einstückige umspritzte Fassung aus einem starren Kunststoffmaterial ist, wobei die Fassung (3, 103) einen Innenrand (31, 131) aufweist, der an den Rand (23, 123) des Grundkörpers (2, 102) formschlüssig angrenzt, **dadurch gekennzeichnet, dass** das Verfahren die Schritte umfasst:
(i) Bereitstellen von zwei oder mehr Grundkörpern (2, 102);
(ii) Bestimmen des oder der Grundkörper (2, 102), die die geringste Dicke aufweisen, und Einstellen einer Spritzgießform (203) einer Spritzgießmaschine auf eine minimale Dicke, die der geringsten Dicke entspricht;
(iii) Einführen eines der Grundkörper (2, 102) in die Spritzgießform (203) einer Spritzgießmaschine;
(iv) Fixieren des eingeführten Grundkörpers (2, 102) in der Spritzgießform (203) mittels Werkzeugelementen (201, 202), wobei der eingeführte Grundkörper (2, 102) an seinem Rand (23, 123) freiliegt;
(v) Einspritzen des Kunststoffmaterials in eine Kavität (207), die von den Werkzeugelementen (201, 202) und dem eingeführten Grundkörper (2, 102) umgrenzt wird; und
(vi) Abkühlen des Kunststoffes unter Ausbildung der einstückigen umspritzten Fassung (3, 103).

11. Verfahren nach Anspruch 10, **dadurch gekennzeichnet, dass** Schritt (iv) das Bewegen eines der beiden Werkzeugelemente (201, 202) zu der Fläche des Grundkörpers (102) hin umfasst, wobei das Werkzeugelement (202) bis in eine Kontaktposition bewegt wird, in der es eine Fläche des Grundkörpers (102) kontaktiert, wobei die Kontaktposition einer Maximalposition entspricht, wenn der eingeführte Grundkörper (102) eine Dicke aufweist, die der minimalen Dicke entspricht, und wobei die Kontaktposition von der Maximalposition abweicht, wenn der eingeführte Grundkörper (102) eine größere Dicke als die minimale Dicke aufweist.

12. Verfahren nach Anspruch 11, **dadurch gekennzeichnet, dass**, wenn der eingeführte Grundkörper (102) eine größere Dicke als die minimale Dicke aufweist, die Differenz zwischen der Maximalposition und der Kontaktposition mittels eines Dickenausgleichselementes (205) des Spritzgießwerkzeuges (200) ausgeglichen wird.

13. Verfahren nach einem der Ansprüche 10 bis 12, **dadurch gekennzeichnet, dass** das zweite Werkzeugelement (202) die Spritzgießform (203) abdichtet, sobald es die Kontaktposition erreicht hat.

## Claims

1. An injection molding tool for an injection molding machine, wherein the injection molding tool (200) for manufacturing a component has a first tool element (201) and a second tool element (202) that can be moved towards the first tool element (201), wherein the component is a cover glass or an optical component that is a mounted filter and has a base body (102) and a socket (103), wherein the base body (102) is a base body made of glass or plastic and has a first surface, a second surface spaced from the first surface, and an edge, and the socket (103) is an integral overmolded socket of a rigid plastic having an inner edge form-fittingly adjacent to the edge of the base body and which is adjacent to one of its two surfaces but not to the other, wherein the injection molding tool has:
- a frame (208) to which the first mold element (201) is rigidly attached and by which the second mold element (202) is movably held;
- an adjusting element (204) which limits the movement of the second tool element (202) towards the first tool element (201) to a maximum position, up to which the second tool element can be moved at most, and at which the dimension of the injection mold formed between the two tool elements has the minimum thickness, wherein the adjusting element (204) is part of the second tool element (202),
- a thickness compensating element (205) formed between the second mold element (202) and a stationary element that is arranged on the frame (208) and on which the thickness compensating element (205) is supported, and that limits the movement of the second mold element (202) to a contact position in which the second tool element (202) contacts a surface of the base body (102) of the component to be molded around, wherein the thickness compensation element (205) can absorb the force exerted on the second tool element (202) to move it in the direction of its maximum position as soon as the second tool element (202) strikes the surface of the base body (101), wherein the thickness compensating element stops the movement of the movable tool element in the contact position, and
- a cavity (207) which is bounded by the tool elements (201, 202) and the base body (101) and into which plastic is injected to form the socket (103).

2. The injection molding tool according to claim 1, **characterized in that** the adjusting element (204) is a screw unit for changing the dimension of the injection mold (203), which is formed between the first tool element (201) and the second tool element (202).

3. The injection molding tool according to any one of the preceding claims, **characterized in that** the thickness compensating element (205) is a spring element.

4. The injection molding tool according to any one of the preceding claims, **characterized in that** the thickness compensating element (205) compensates for the difference between the minimum thickness, which is set by means of the adjusting element (204), and the actual thickness of the base body (101).

5. The injection molding tool according to any one of the preceding claims, **characterized in that** the base body (102) is held in an injection mold (203) by means of vacuum.

6. The injection molding tool according to any one of the preceding claims, **characterized in that** the second tool element (202) seals an injection mold (203) as soon as it has reached the contact position.

7. The injection molding tool according to any one of the preceding claims, **characterized in that** it has a locking element (206) for preventing movement of the fixed second tool element (202).

8. The injection molding tool according to any one of the preceding claims, **characterized in that** the locking element (206) is a wedge.

9. The injection molding tool according to claim 8, **characterized in that** the wedge can be moved in a direction which is orthogonal to the direction of movement of the second tool element (202).

10. A method for manufacturing a component (1, 101) by means of an injection molding tool according to any one of claims 1 to 9, wherein the component is a cover glass or an optical component that is a mounted filter and wherein the component has a base body (2, 102) and a socket (3, 103), wherein the base body (2, 102) has a first surface (21, 121), a second surface (22, 122) spaced apart from the first surface (21, 121), and an edge (23, 123), and the socket (3, 103) is an integral overmolded socket made of a rigid plastic material, wherein the socket (3, 103) has an inner edge (31, 131) which is form-fittingly adjacent to the edge (23, 123) of the base body (2, 102), **characterized in that** the method comprises the steps of:
(i) providing two or more base bodies (2, 102);
(ii) determining the base body or bodies (2, 102) having the thinnest thickness and setting an injection mold (203) of an injection molding machine to a minimum thickness corresponding to the thinnest thickness;
(iii) inserting one of the base bodies (2, 102) into the injection mold (203) of an injection molding machine;
(iv) fixing the inserted base body (2, 102) in the injection mold (203) by means of tool elements (201, 202), wherein the inserted base body (2, 102) is exposed at its edge (23, 123);
(v) injecting the plastic material into a cavity (207) which is bounded by the tool elements (201, 202) and the inserted base body (2, 102); and
(vi) cooling the plastic while forming the integral overmolded socket (3, 103).

11. The method according to claim 10, **characterized in that** step (iv) comprises moving one of the two tool elements (201, 202) towards the surface of the base body (102), wherein the tool element (202) is moved into a contact position in which it contacts a surface of the base body (102), wherein the contact position corresponds to a maximum position when the inserted base body (102) has a thickness corresponding to the minimum thickness, and wherein the contact position deviates from the maximum position when the inserted base body (102) has a thickness greater than the minimum thickness.

12. The method according to claim 11, **characterized in that**, when the inserted base body (102) has a thickness greater than the minimum thickness, the difference between the maximum position and the contact position is compensated by means of a thickness compensating element (205) of the injection molding tool (200).

13. The method according to any one of claims 10 to 12, **characterized in that** the second tool element (202) seals the injection mold (203) as soon as it has reached the contact position.

## Revendications

1. Moule d'injection pour une machine de moulage par injection, dans lequel le moule d'injection (200) comprend, pour fabriquer un composant, un premier élément d'outil (201) et un second élément d'outil (202) mobile vers le premier élément d'outil (201), le composant étant un verre de couverture ou un composant optique qui est un filtre monté, et un corps de base (102) et une douille (103), le corps de base (102) étant un corps de base en verre ou en plastique et une première surface, une seconde surface espacée de la première surface et un bord, et le support (103) est un support monobloc moulé par injection en plastique rigide, qui comprend un bord intérieur qui est contigu au bord du corps de base par complémentarité de formes et qui est contigu à l'une de ses deux surfaces, mais pas à l'autre surface, l'outil de moulage par injection comprenant :
- un cadre (208), auquel le premier élément d'outil (201) est fixé de manière rigide et à partir duquel le deuxième élément d'outil (202) est maintenu de manière mobile ;
- un élément de réglage (204) qui limite le mouvement du deuxième élément d'outil (202) vers le premier élément d'outil (201) à une position maximale, jusqu'à laquelle le deuxième élément d'outil peut être déplacé au maximum, et dans lequel la dimension du moule d'injection formé entre les deux éléments d'outils a l'épaisseur minimale, dans lequel l'élément de réglage (204) fait partie du deuxième élément d'outil (202),
- un élément de compensation d'épaisseur (205), formé entre le deuxième élément d'outil (202) et un élément fixe disposé sur le cadre (208) et sur lequel l'élément de compensation d'épaisseur (205) est supporté, et limitant le déplacement du deuxième élément d'outil (202) à une position de contact dans laquelle le deuxième élément d'outil (202) entre en contact avec une surface du corps de base (102) de l'élément de construction à surmouler, dans lequel l'élément de compensation d'épaisseur (205) peut absorber la force exercée sur le deuxième élément d'outil (202) pour le déplacer vers sa position maximale, dès que le deuxième élément d'outil (202) rencontre la surface du corps de base (101), dans lequel l'élément de compensation d'épaisseur arrête le déplacement de l'élément d'outil mobile dans la position de contact, et
- une cavité (207) délimitée par les éléments d'outil (201, 202) et le corps de base (101) et injectée dans le plastique pour former le support (103).

2. Moule d'injection selon la revendication 1, **caractérisé en ce que** l'élément de réglage (204) est une unité de vissage pour modifier la dimension du moule d'injection (203), qui est formée (202) entre le premier élément d'outil (201) et le second élément d'outil.

3. Moule d'injection selon l'une des revendications précédentes, **caractérisé en ce que** l'élément de compensation d'épaisseur (205) est un élément à ressort.

4. Moule d'injection selon l'une quelconque des revendications précédentes, **caractérisé en ce que** l'élément de compensation d'épaisseur (205) compense la différence entre l'épaisseur minimale réglée au moyen de l'élément de réglage (204) et l'épaisseur réelle du corps de base (101).

5. Moule d'injection selon l'une des revendications précédentes, **caractérisé en ce que** le corps de base (102) est maintenu dans un moule d'injection (203) au moyen d'un vide.

6. Moule d'injection selon l'une des revendications précédentes, **caractérisé en ce que** le deuxième élément d'outil (202) rend étanche un moule d'injection (203) dès qu'il a atteint la position de contact.

7. Moule d'injection selon l'une quelconque des revendications précédentes, **caractérisé en ce qu'**il comprend un élément de verrouillage (206) pour empêcher le mouvement du second élément d'outil fixe (202).

8. Moule d'injection selon l'une quelconque des revendications précédentes, **caractérisé en ce que** l'élément de verrouillage (206) est une clavette.

9. Moule d'injection selon la revendication 8, **caractérisé en ce que** la clavette est mobile dans une direction qui est orthogonale à la direction de déplacement du second élément d'outil (202).

10. Procédé de fabrication d'un composant (1, 101) au moyen d'un moule d'injection selon l'une quelconque des revendications 1 à 9, dans lequel le composant est un verre de protection ou un composant optique qui est un filtre chanfreiné, et dans lequel le composant comprend un corps de base (2, 102) et un support (3, 103), dans lequel le corps de base (2, 102) comprend une première surface (21, 121), une seconde surface (22, 122) espacée de la première surface (21, 121) et un bord (23, 123), et le support (3, 103) est un support monobloc surmoulé en matière plastique rigide, dans lequel le support (3, 103) comprend un bord intérieur (31, 131) contigu par complémentarité de formes au bord (23, 123) du corps de base (2, 102), **caractérisé en ce que** le procédé comprend les étapes suivantes :
(i) fourniture de deux corps de base ou plus (2, 102) ;
(ii) détermination du ou des corps de base (2, 102), qui comportent la plus faible épaisseur et réglage d'un moule d'injection (203) d'une machine de moulage par injection à une épaisseur minimale correspondant à la plus faible épaisseur ;
(iii) introduction d'un des corps de base (2, 102) dans le moule d'injection (203) d'une machine de moulage par injection ;
(iv) fixation du corps de base (2, 102) introduit dans le moule d'injection (203) au moyen d'éléments d'outil (201, 202), dans lequel le corps de base (2, 102) introduit est exposé à son bord (23, 123) ;
(v) injection de la matière plastique dans une cavité (207) délimitée par les éléments d'outil (201, 202) et le corps de base inséré (2, 102) ; et
(vi) refroidissement de la matière plastique en formant le support (3, 103) monobloc surmoulé.

11. Procédé selon la revendication 10, **caractérisé en ce que** l'étape (iv) comprend le déplacement de l'un des deux éléments d'outil (201, 202) vers la surface du corps de base (102), dans lequel l'élément d'outil (202) est déplacé jusqu'à une position de contact avec une surface du corps de base (102), dans lequel la position de contact correspond à une position maximale lorsque le corps de base inséré (102) a une épaisseur correspondant à l'épaisseur minimale, et dans lequel la position de contact s'écartant de la position maximale le corps de base inséré (102) présente une épaisseur supérieure à l'épaisseur minimale.

12. Procédé selon la revendication 11, **caractérisé en ce que**, lorsque le corps de base introduit (102) présente une épaisseur supérieure à l'épaisseur minimale, la différence entre la position maximale et la position de contact est compensée au moyen d'un élément de compensation d'épaisseur (205) du moule d'injection (200).

13. Procédé selon l'une des revendications 10 à 12, **caractérisé en ce que** le deuxième élément d'outil (202) rend étanche le moule d'injection (203) dès qu'il a atteint la position de contact.
